# EUROPÄISCHE PATENTSCHRIFT

(11) **EP 0 744 867 B1**
(45) Veröffentlichungstag und Bekanntmachung des Hinweises auf die Patenterteilung: **09.02.2000**
(21) Anmeldenummer: 96108314.4
(22) Anmeldetag: 23.05.1996
(51) Int. Cl.: H04N 7/16, H04N 7/173

(54) **Verfahren zur Verbindungssteuerung für interaktive Dienste**
Communication control method for interactive services
Méthode de contrôle de communication pour services interactifs

(30) Priorität: 23.05.1995 DE 19518930
(43) Veröffentlichungstag der Anmeldung: 27.11.1996
(73) Patentinhaber: SIEMENS AKTIENGESELLSCHAFT, 80333 München (DE)
(72) Erfinder: Gundlach, Michael, Dr., Dipl.-Math., 81739 München (DE); Tengler, Walter, Dipl.-Ing., 86316 Friedberg (DE); Becker, Helmut, Dipl.-Ing., 83043 Bad Aibling (DE); Kosciessa, Hauke, Dr., Dipl.-Phys., 81373 München (DE)

(56) Entgegenhaltungen:
- US-A- 5 282 249
- IEEE COMMUNICATIONS MAGAZINE, Bd. 32, Nr. 5, Mai 1994, NEW YORK, NY, US, Seiten 68-80, XP000451097 CHANG ET AL: "An Open-Systems Approach to Video on Demand"
- IEEE TRANSACTIONS ON CONSUMER ELECTRONICS, Bd. 36, Nr. 3, 1.August 1990, NEW YORK, NY, US, Seiten 744-752, XP000162915 PEYRET P ET AL: "SMART CARDS PROVIDE VERY HIGH SECURITY AND FLEXIBILITY IN SUBSCRIBERS MANAGEMENT"

## Beschreibung

Die Erfindung betrifft ein Verfahren gemäß dem Oberbegriff des Patentanspruchs 1.

Heute werden Dienste, die eine Mehrzahl von Diensten integrieren und dem Teilnehmer Interaktionen erlauben unter dem Sammelbegriff interaktive Multimediadienste zusammengefaßt. Darunter werden spezielle Dienste, wie beispielsweise Video on Demand oder Distant Learning verstanden, die von einer beim Teilnehmer installierten Endeinrichtung in Anspruch genommen werden. Es ist naheliegend, als solche Endeinrichtungen Fernsehgeräte zu benutzen, da diese zum einen bereits in großer Zahl beim Teilnehmer vorhanden sind und zum anderen dem Teilnehmer die Möglichkeit bieten,auf optischem oder akustischem Wege einen Dialog zu dem jeweiligen Diensteanbieter zu führen.

Zur Behandlung dieser Abläufe werden spezielle Steuervorrichtungen beim Teilnehmer eingesetzt. Diese Steuervorrichtungen werden als Set-Top-Boxen bezeichnet und als Zusatzeinrichtung einem Fernsehgerät zugeschaltet. In der Regel werden sie in die,dem Fernsehgerät zugeführte Verbindungsleitung eingefügt. Einfache Set-Top-Boxen können dabei zusätzliche Fernsehkanäle wie zum Beispiel Pay TV decodieren und die entsprechenden Informationen am Bildschirm des jeweiligen Fernsehgerätes darstellen. Leistungsfähigere Set-Top-Boxen können interaktiv vom Teilnehmer mit Hilfe einer Fernbedienung zur Nutzung der oben angesprochenen speziellen Dienste angesteuert werden. Der technologische Trend zu immer leistungsfähigeren und kostengünstigeren Speichern hat dazu geführt, daß insbesondere der Abruf von Video-Filmen (Video on demand) technisch realisierbar geworden ist und auch zunehmend von den verantwortlichen Diensteanbietern bereitgestellt wird. Die Video-Filme sind dabei gegebenenfalls in komprimierter Form in großen digitalen Speichervorrichtungen, die als Content Provider bezeichnet werden, abgespeichert.

Eine Set-Top-Box stellt über ein Datenübertragungsnetz eine Verbindung zu den in Frage kommenden Content Providern her und steuert die Auswahl und Wiedergabe von z.B. Video-Filmen in Abhängigkeit von den Eingaben des Teilnehmers. Als Datenübertragungsnetz werden beim Stand der Technik Koaxialnetze verwendet. Im Sinne einer Broadcast-Übertragung werden dabei die entsprechend umgeformten Fernseh-Videosignale allen Teilnehmern zugeführt. Problematisch dabei ist insbesondere, daß ein jeder Teilnehmer spezielle Wünsche bezüglich der Inanspruchnahme der Dienste hat, die es zu steuern gilt. Beim Stand der Technik in der Regel eine teilnehmerindividuelle Kennung eingerichtet, die die Berechtigung eines Teilnehmers wiederspiegelt, einen Dienst in Anspruch zu nehmen.

Aus der deutschen Offenlegungsschrift DE 36 08 028 A1 ist ein Verfahren bekannt, wie die Berechtigung des Zugangs zu einem Signalverarbeitungssystem überprüft werden kann. Dabei wird in der in Frage kommenden peripheren Einrichtung ein Schlüsselwort hinterlegt, das representativ für dieselbe ist. Nachteilig hieran ist jedoch, daß eine derartige Vorgehensweise die Mobilität des betreffenden Teilnehmers stark einschränkt. Außerdem kann das hinterlegte Schlüsselwort unter Umständen von anderen Teilnehmern ermittelt werden, ein Umstand, den es zu vermeiden gilt.

Der Artikel IEEE COMMUNICATIONS MAGAZINE, Bd. 32, Nr. 5, Mai 1994, NEW YORK, NY, US, Seiten 68-80, XP000451097 CHANG ET AL: "An Open-Systems Approach to Video on Demand" schildert ein Verfahren zur Verbindungssteuerung für interaktive Dienste zwischen einem Übertragungsnetz und einer peripheren Steuervorrichtung, das zwei Kanäle verwendet, nämlich ein erster Kanal für Steuerungssignale zwischen der peripheren Steuervorrichtung und einer dem Übertragungsnetz angeschlossenen Netzsteuervorrichtung und ein zweiter Kanal für Daten zwischen der peripheren Steuervorrichtung und einer dem Übertragungsnetz angeschlossenen Speichervorrichtung. Die Verbindung auf dem ersten Kanal wird zuerst aufgebaut, um Zahlenwerte von der peripheren Steuervorrichtung und der Netzsteuervorrichtung auf Übereinstimmung zu prüfen. Gegebenenfalls wird dann eine zweite Verbindung für Daten auf dem zweiten Kanal aufgebaut.

Der Erfindung liegt die Aufgabe zugrunde, einen Weg aufzuzeigen, wie für die Inanspruchnahme interaktiver Video-Dienste den individuellen Bedürfnissen der Teilnehmer unter Berücksichtigung des Sicherheitsaspekts sowie der Mobilität des Teilnehmers gerecht werden kann.

Die Erfindung wird, ausgehend vom Oberbegriff des Patentanspruchs 1,durch die im kennzeichnenden Teil angegebenen Merkmale gelöst.

Der Vorteil der vorliegenden Erfindung ist darin zu sehen, daß ein Verbindungsaufbau von einem Teilnehmer zu der zugeordneten Steuervorrichtung erst dann gesteuert wird, wenn seine persönliche Kennung hierfür dies erlaubt. Hierzu wird beim Teilnehmer ein erster Zahlenwert nach Maßgebe einer Algorithmusprozedur ermittelt und das Ergebnis der Steuervorrichtung übermittelt. Dort werden zeitgleich unter Benutzung einer gleichartigen Prozedur die gleichen arithmetischen Berechnungen durchgeführt und die Ergebnisse beider Berechnungen miteinander verglichen.

Weitere Ausgestaltungen der Erfindung sind in den Unteransprüchen angegeben.

Gemäß Anspruch 2 ist vorgesehen, daß der erste Zahlenwert ermittelt wird, indem einem Datenträger der peripheren Steuervorrichtung eine Kennung entnommen wird, die zusammen mit einer von der Steuervorrichtung erhaltenen Zufallszahl einer ersten Prozedur als Eingangsgröße zugeführt wird, die unter Verwendung eines definierten Algorithmusses den ersten Zahlenwert als Ausgangsgröße erzeugt und der Steuervorrichtung zusendet. Damit ist der Vorteil verbunden, daß aufgrund der Benutzung der Zufallszahl die zweite Kennung von z.B. weiteren Teilnehmern nicht ermittelt werdeen kann. Insofern ist damit einem erhöhten Sicherheitsaspekt Genüge getan.

Gemäß Anspruch 3 ist vorgesehen,daß der zweite Zahlenwert ermittelt wird, indem die Kennung in der Steuervorrichtung abgespeichert wird und zusammen mit der erzeugten Zufallszahl einer zweiten Prozedur als Eingangsgröße zugeführt wird, die als Ausgangswert den zweiten Zahlenwert ermittelt. Damit ist der Vorteil verbunden, daß dieselben Kalkulationsvorgänge an einer anderen Stelle im Netz durchgeführt werden.

Gemäß Ansprüche 4 ist vorgesehen, daß die erste und zweite Prozedur identisch sind und der Vergleich in der Steuervorrichtung durchgeführt wird. Damit ist der Vorteil verbunden, daß die erste Verbindung erst dann aufgebaut wird, wenn die Berechtigung des Teilnehmers korrekt ist. Dies ist mit einer weiteren Erhöhung der Sicherheit verbunden.

Gemäß Anspruch 5 ist vorgesehen, daß die erste Prozedur neben dem ersten Zahlenwert einen weiteren Zahlenwert generiert,mit dem die über die erste Verbindung übertragenen Informationen verschlüsselt werden. Damit ist der Vorteil verbunden,daß die über die betreffende Verbindung geleiteten Informationen keinem weiteren Teilnehmer zugänglich sind.

Gemäß Anspruch 6 ist vorgesehen,daß der Datenträger eine weitere Kennung aufweist, die gegebenenfalls temporären Charakter hat. Damit ist der Vorteil verbunden, daß bereits beim Verbindungsaufbau die Anonymität des Teilnehmers gegeben ist.

Gemäß Anspruch 7 ist vorgesehen, daß über die erste Verbindung ein von der peripheren Steuervorrichtung abgegebenes Auswahlsignal der Steuervorrichtung zugeführt wird, mittels dem von derselben die zumindest eine Speichervorrichtung adressiert wird, woraufhin von dieser ein mit den dort gespeicherten Informationen abgespeichertes Schlüsselwort über die Steuervorrichtung der betreffenden peripheren Steuervorrichtung zugeführt wird,wobei das Schlüsselwort während des Übertragungsvorgangs mit dem weiteren Zahlenwert verschlüsselt ist. Damit ist eine weitere Erhöhung der Sicherheit verbunden.

Gemäß Anspruch 8 ist vorgesehen, daß nach Maßgabe des gewählten Dienstes das Schlüsselwort verändert wird. Dadurch wird beispielsweise verhindert, daß ein Video mehrmals zur gleichen Zeit über das Fernsehverteilnetz gesendet werden muß. Außerdem wird damit verhindert, daß ein Teilnehmer ein Video bei einmaliger Zahlung mehrmals nutzt.

Gemäß Anspruch 9 ist vorgesehen, daß nach Erhalt des Schlüsselwortes von der betreffenden peripheren Steuervorrichtung ein Quittungssignal der Steuervorrichtung zugeführt wird, woraufhin zum einen die erste Verbindung ausgelöst und zum anderen die zweite Verbindung erstellt wird. Damit ist der Vorteil verbunden, daß die durch das Auslösen bereitgestellt Netzkapazität weiteren Verbindungen zugeteilt werden kann.

Gemäß Anspruch 10 ist vorgesehen, daß im Zuge des ersten bzw. zweiten Verbindungsaufbaus eine schmalbandige bzw. gegebenenfalls eine breitbandige Verbindung erstellt wird. Damit ist der Vorteil einer effizienten Nutzung von Netzresourssen verbunden.

Gemäß Anspruch 11 ist vorgesehen, daß der Datenträger mit der peripheren Steuervorrichtung lösbar verbunden ist. Damit ist der Vorteil einer erhöhten Mobilität des Teilnehmers verbunden.

Gemäß Anspruch 12 ist vorgesehen, daß als Datenträger eine Chipkarte mit integriertem Prozessor und Speichermitteln verwendet wird, auf dem die erste Prozedur zum Ablauf gelangt. Damit ist der Vorteil einer einfachen Bedienbarkeit durch den Teilnehmer verbunden.

Gemäß Anspruch 13 ist vorgesehen, daß die Chipkarte eine vorausbezahlte Chipkarte ist. Damit ist der Vorteil einer flexibleren Handhabung furch den Teilnehmer verbunden. Die vorausbezahlte Chipkarte kann dabei sowohl eine "Wegwerfkarte" als auch eine wiederaufladbare Karte sein.

Gemäß Anspruch 14 ist vorgesehen, daß die Netzknoten Informationen nach dem asynchronen Transfermodus durchschalten.

Die Erfindung wird im folgenden anhand eines Ausführungsbeispiels näher erläutert:

Es zeigt
- Figur 1: eine Anordnung, mittels der das erfindungsgemäße Verfahren zum Ablauf gelangt,
- Figur 2: das erfindungsgemäße Verfahren in Form eines Flußdiagramms.

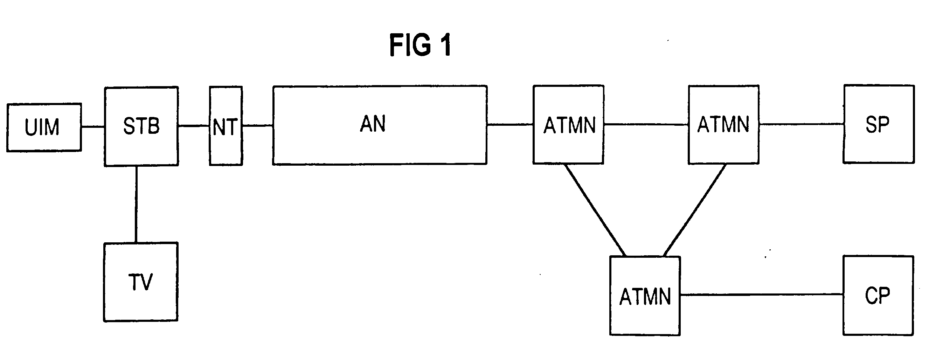

In Figur 1 ist eine Anordnung aufgezeigt, auf der das erfindungsgemäße Verfahren zum Ablauf gelangt. Dabei sind die peripheren Steuervorrichtungen als Set-Top-Boxen STB ausgebildet, wobei von diesen lediglich eine in Fig. 1 dargestellt ist. An dieselben sind jeweils handelsübliche Fernsehgeräte TV als Endgeräte angeschlossen. Optional können auch Personal Computer (PC) verwendet werden. In eine Set-Top-Box STB kann vom Teilnehmer bei Bedarf ein Datenträger UIM mechanisch eingeführt werden.Erfindungsgemäß wird dabei eine Chipkarte verwendet. Diese enthält in bekannter Weise einen Prozessor mit Speichermitteln, in denen eine erste und zweite Kennung Kₐ, Kᵢ sowie eine Prozedur P abgespeichert sind. Erstere enthält den Namen des Teilnehmers oder gegebenenfalls eine persönliche Identifikationsnummer (PIN) während die Kennung Kᵢ eine beliebige Zahl darstellt. Die Schnittstelle der peripheren Steuervorrichtungen (Set-Top-Box STB) zu einem Zugangsnetz (Access Network) AN wird durch jeweils eine Netzabschlußvorrichtung NT gebildet. Das Zugangsnetz AN ist als Koaxialnetz ausgebildet, über das Fernsehsignale zu den einzelnen Teilnehmern hin im Sinne einer Broadcast Übertragung geleitet werden.

Das Koaxialnetz AN ist weiterhin mit einem Vermittlungsnetz verbunden.Dieses wird aus einer Mehrzahl von miteinander verbundenen Vermittlungseinrichtungen ATMN gebildet. Dabei handelt es sich bei vorliegendem Ausführungsbeispiel um Vermittlungseinrichtungen, die Informationssignale nach dem asynchronen Transfermodus (ATM) übertragen. Die Ausbildung des Vermittlungsnetzes als ATM-Netz ist nicht zwingend, so daß auch andere Übertragungsprinzipien zur Anwendung gelangen können. An wenigstens eine der Vermittlungseinrichtungen ATMN sind im weiteren wenigstens eine Steuervorrichtung SP sowie wenigstens eine Speichervorrichtung CP angeschlossen. Erstere sind dabei als Service Provider ausgebildet, während letztere die Funktion von Content Provider aufweisen. In den Service Providern SP wird zum einen die Berechtigung des Teilnehmerzugangs zum Netz ermittelt und zum anderen die Steuerungsvorgänge zur Übertragung der in den Content Providern CP gespeicherten Informationen zum betreffenden Teilnehmern gesteuert. Im Ausführungsbeispiel wird davon ausgegangen, daß diese Informationen Video-Filme sind, die in den Content Providern CP abgespeichert sind.

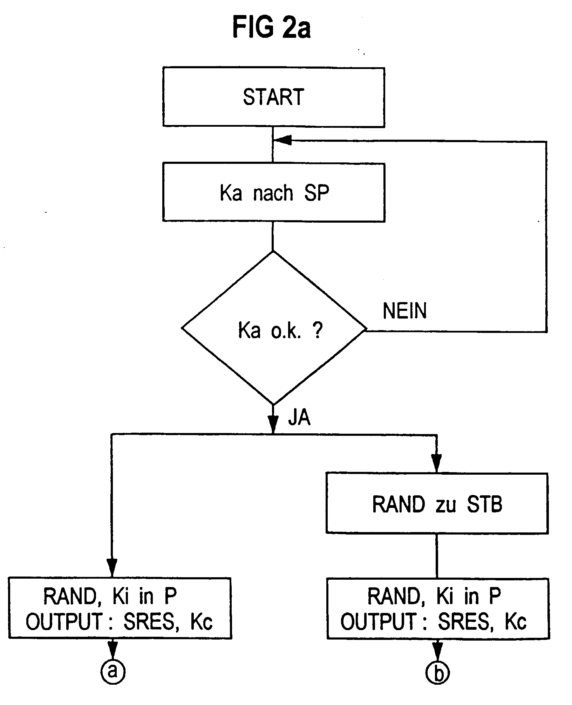

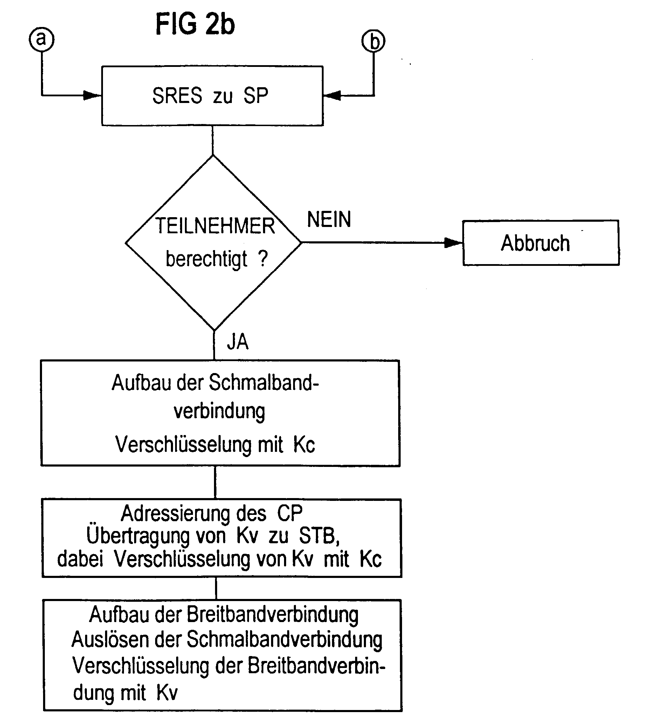

Im folgenden wird nun anhand des in Fig.2 gezeigten Flußdiagrammes aufgezeigt, wie beispielsweise ein Verbindungsaufbau zum Abruf eines Video-Filmes von einem Teilnehmer unter Benutzung seiner perönlichen Daten eingeleitet wird:

Der Teilnehmer, der einen Video-Film auf seinem Fernsehgerät TV anzusehen wünscht, führt zunächst seine Chipkarte C in die an seiner Set-top-Box STB hierfür vorgesehenen Einfuhrschlitze. Durch diesen Vorgang wird dem, seiner Set-Top-Box STB zugeordneten Service Provider SP mit einem Anforderungssignal angezeigt, daß die Inanspruchnahme eines Dienstes von diesem Teilnehmer gewünscht wird. Im Zuge dieser Anforderung wird von der Set-Top-Box STB die,der Chipkarte C entnommene erste Kennung Kₐ dem Service Provider SP zugeführt. Dort war beim Einrichten des Teilnehmers die Kennung Kₐ mit abgespeichert worden, so daß von hier eine Erkennung des Teilnehmers sofort durchgeführt werden kann. Die Erkennung des Teilnehmers erfolgt somit unabhängig von einer bestimmten Set-Top-Box.

Weiterhin wurde bei der Initialisierung des Teilnehmers die auf der Chipkarte C enthaltene zweite Kennung Kᵢ sowie die ebenfalls mitgespeicherte Prozedur P im Service Provider SP mit abgespeichert. Somit sind also erste und zweite Kennung sowie die Prozedur P an zwei Stellen des Übertragungsnetzes, nämlich auf der Chipkarte sowie im Service Provider SP gespeichert. Um bereits beim Verbindungsaufbau die Anonymität eines Teilnehmers sicherzustellen, kann alternativ zum Senden der ersten Kennung Kₐ eine temporäre Kennung Kₜ verwendet werden. Dabei wird die erste Kennung Kₐ nur beim allerersten Verbindungsaufbau verwendet. Nach erfolgreichem Verbindungsaufbau wird die temporäre Kennung Kₜ vom Service Provider SP ermittelt und zur Set-Top-Box STB gegebenenfalls mit einem Schlüssel K_{c} übertragen. Die Kennung Kₜ gilt nur für die Dauer der bestehenden Verbindung und kann nach jedem neuem Verbindungsaufbau neu vergeben weren.

Auf das von der betreffenden Set-top-Box STB abgegebene Anforderungssignal hin verifiziert der zugeordnete Service Provider SP den rufenden Teilnehmer mit Hilfe der ersten Kennung Kₐ. Im folgenden wird dann von demselben eine Zufallszahl RAND zu der betreffenden Set-top-Box STB gesendet. Diese wird zusammen mit der auf der Chipkarte C abgelegten zweiten Kennung Kᵢ als Eingangsgröße der Prozedur P zugeführt. Diesselbe ist ebenfalls auf der Chipkarte C abgespeichert und gelangt auch dort auf dem mitintegrierten Prozessor zum Ablauf. Als Ausgangsgröße wird von dieser Prozedur P zum einen ein bestimmter Zahlenwert SRES ermittelt, der dem Service Provider SP übermittelt wird. Zum anderen wird als weitere Ausgangsgröße ein Schlüsselwort K_{c} ermittelt und in der Set-Top-Box STB abgespeichert.

Zeitgleich zu diesem Vorgang werden dieselben Vorgänge imService Provider SP durchgeführt. Der dort ebenfalls abgespeicherten Prozedur P werden als Eingangsgröße die eingangs erzeugte Zufallszahl RAND sowie die ebenfalls dort abgespeicherte zweite Kennung Kᵢ zugeführt. Als Ergebnis wird - in gleicher Weise wie bei den Berechnungsvorgängen auf der Chipkarte C - ein bestimmter Zahlenwert ermittelt. Dieser wird nun mit dem von der Set-Top-Box STB erhaltenen Zahlenwert SRES verglichen. Stimmen beide Zahlenwerte überein, wird davon ausgegangen, daß der Teilnehmer eine Berechtigung zur Durchführung des betreffenden Dienstes hat. In vorliegendem Ausführungsbeispiel ist er also berechtigt, von einem der Content Provider CP Video-Filme abzurufen.

Im folgenden wird nun eine Verbindung zwischen dem Service Provider SP sowie der betreffenden Set-top-Box STB aufgebaut. Dabei handelt es sich in der Regel um eine Schmalbandverbindung. Die Informationen, die dem Teilnehmer über diese Verbindung angeboten werden, werden mit dem Schlüsselwort K_{c} verschlüsselt. Über diese Verbindung wird dem Teilnehmer vom Service Provider SP beispielsweise ein Menü angeboten,in dem die verschiedenen vom Diensteanbieter vorgesehenen Dienste aufgeführt sind. Gemäß dem vorliegenden Ausführungsbeispiel wird also der Teilnehmer einen Video-Film auswählen. Die betreffende Auswahl wird als Auswahlsignal der Steuervorrichtung SP zugeführt. Auf das Auftreten dieses Auswahlsignals hin wird dann dem Teilnehmer eine Liste von Filmen angeboten. Durch ein weiteres Auswahlsignal wird dem Service Provider SP signalisiert, welcher Film zu dem Fernsehgerät TV hin übertragen werden soll. Die Auswahl eines Filmes kann gegebenenfalls auch durch Einspielen von Video-Clips auf das Fernsehgerät TV unterstützt werden. Zu diesem Zweck muß dann eine Breitbandverbindung erstellt werden, über die die erforderlichen Informationen dem Teilnehmer übertragen werden. Nach Erhalt des Auswahlsignals wird eine Adressierung des in Frage kommenden Content Providers CP durch den Service Provider SP durchgeführt. Dies ist möglich, da letzterer Informationen darüber enthält, welche Filme in welchen Content Providern CP abgespeichert sind.

Im folgenden wird vom Service Provider SP ein Verbindungsaufbau über die in Frage kommenden Vermittlungseinrichtungen ATMN zu den betreffenden Content Provider CP durchgeführt. Dieser entnimmt ein zusammen mit dem Video-Film abgespeichertes weitere Schlüsselwort Kᵥ und überträgt dieses zum Service Provider SP, der dasselbe mit dem bereits ermittelten Schlüsselwort K_{c} verschlüsselt und beide Größen zur betreffenden Set-to-Box STB überträgt. Dort wird zum einen das Schlüsselwort Kᵥ wiederhergestellt und abgespeichert. Das Schlüsselwort Kᵥ soll im folgenden den vom Content Provider CP über eine noch zu erstellende Breitbandverbindung zugeführte Video-Film verschlüsseln. Der Content Provider CP kann das Schlüsselwort Kᵥ aber auch nach Maßgabe des gewünschten Dienstes verändern.Soll beispielsweise ein Video-Film gleichzeitig an mehrere Benuzter (z.B. Pay TV) gesendet werden, ist die verschlüsselte Übertragung mit einem Schlüsselwort Kᵥ ausreichend. Soll ein Video-Film lediglich an einen Benutzer (z.B. Video on Demand) gesendet werden, soll das Schlüsselwort Kᵥ teilnehmerindividuell verändert werden.

Nach Abschluß dieser Vorgänge wird ein Quittungssignal dem Service Provider SP zugeführt, wodurch derselbe dazu veranlaßt wird, eine breitbandige Verbindung von dem Content Provider CP zu der bestreffenden Set-top-Box STB über das Übertragungsnetz sowie das Koaxialnetz AN aufzubauen. Im folgenden können dann die Video-Filme vom Content Provider CP zu der betreffenden Set-top-Box mit Verschlüsselungsgröße KC übertragen werden.

Diese Vorgänge kann der Teilnehmer von jeder beliebigen Set-Top-Box STB eines Teilnehmernetzes ausführen. Eine örtliche Gebundenheit ist somit nicht gegeben,da die Kennung des Teilnehmers zentral und unabhängig von der Set-Top-Box STB im Service Provider SP abgespeichert ist. Als Datenträger wird erfindungsgemäß eine Chipkarte C verwendet; andere Datenträger können ebenfalls ohne Einschränkung wie beispielsweise ein Plug-in-Modul Verwendung finden. Auf der Chipkarte C können weiterhin eine persönliche Identifikationsnummer PIN verwendet werden sowie Geldbeträge elektronisch erfaßt werden, die bei Verwendung eines Dienstes vom Service Provider SP heruntergezählt werden. Unter Verwendung der beschriebenen Prozeduren können somit auch vorausbezahlte Chipkarten Verwendung finden. Der für den gewählten Dienst (z.B. ein Video) zu zahlende Betrag wird von einem in der Chipkarte gespeicherten Wert abgezogen. Nur wenn die Chipkarte diese Aktion quittiert (z.B. durch Senden einer Zahl, die durch Anwendung der Prozedur P auf die Kennung Kᵢ und eine vom Sevice Provider SP zur Set-Top-Box STB gesendeten neu ermittelten Zufallszahl ) wird der gewünschte Dienst durchgeführt. Dabei kann die vorausbezahlte Chipkarte sowohl als "Wegwerfkarte" als auch als wiederaufladbare Karte ausgebildet sein.

## Patentansprüche

1. Verfahren zur Verbindungssteuerung für interaktive Dienste mit peripheren Steuervorrichtungen (STB) sowie mit wenigstens einem, ein Übertragungsnetz bildender Netzknoten (ATMN), an das zumindest eine Speichervorrichtung (CP) sowie zumindest eine Steuervorrichtung (SP) angeschlossen sind, wobei ein erster Verbindungsaufbau von einer der peripheren Steuervorrichtungen (STB) zu der zumindest einen Steuervorrichtung (SP) nach Maßgabe eines Vergleichs zweier Zahlenwerte erst dann gesteuert wird, wenn ein in der betreffenden peripheren Steuervorrichtung (STB) ermittelter erster Zahlenwert (SRES) mit einem in der zumindest einen Steuervorrichtung (SP) ermittelten zweiten Zahlenwert übereinstimmt, und daß im Anschluß daran nach Maßgabe eines von der peripheren Steuervorrichtung (STB) abgegebenen Auswahlsignals gegebenenfalls ein zweiter Verbindungsaufbau zwischen der zumindest einen Speichervorrichtung(CP) und der betreffenden peripheren Steuervorrichtung (STB) gesteuert wird,
**dadurch gekennzeichnet**,
daß über die durch den zweiten Verbindungsaufbau erstellte Verbindung zu der betreffenden peripheren Steuervorrichtung (STB) Informationen mit einem Schlüsselwort (Kᵥ) verschlüsselt übertragen werden, welches teilnehmerindividuell und/ oder diensteindividuell einstellbar ist, und welches in der Speichervorrichtung mit den dort gespeicherten Informationen abgespeichert ist.

2. Verfahren nach Anspruch 1,
**dadurch gekennzeichnet**,
daß der erste Zahlenwert (SRES) ermittelt wird, indem einem Datenträger (UIM) der peripheren Steuervorrichtung (STB) eine Kennung (Ki) entnommen wird, die zusammen mit einer von der Steuervorrichtung (SP) erhaltenen Zufallszahl (RAND) einer ersten Prozedur (P) als Eingangsgröße zugeführt wird, die unter Verwendung eines definierten Algorithmusses den ersten Zahlenwert als Ausgangsgröße erzeugt und der Steuervorrichtung (SP) zusendet.

3. Verfahren nach Anspruch 1 oder 2,
**dadurch gekennzeichnet**,
daß der zweite Zahlenwert ermittelt wird, indem diese Kennung (Kᵢ) in der Steuervorrichtung (SP) abgespeichert wird und zusammen mit der erzeugten Zufallszahl (RAND) einer zweiten Prozedur als Eingangsgröße zugeführt wird, die als Ausgangswert den zweiten Zahlenwert ermittelt.

4. Verfahren nach einem der Ansprüche 1 bis 3
**dadurch gekennzeichnet**,
daß die erste und zweite Prozedur identisch sind und der Vergleich in der Steuervorrichtung (SP) durchgeführt wird.

5. Verfahren nach Anspruch 1 bis 3,
**dadurch gekennzeichnet**,
daß die erste Prozedur neben dem ersten Zahlenwert einen weiteren Zahlenwert (K_{c}) generiert, mit dem die über die erste Verbindung übertragenen Informationen verschlüsselt werden.

6. Verfahren nach Anspruch 1 bis 4
**dadurch gekennzeichnet**,
daß der Datenträger (UIM) eine weitere Kennung (Kₐ, Kₜ) aufweist, die gegebenenfalls temporären Charakter hat.

7. Verfahren nach Anspruch 1 bis 4,
**dadurch gekennzeichnet**,
daß über die erste Verbindung ein von der peripheren Steuervorrichtung (STB) abgegebenes Auswahlsignal der Steuervorrichtung (SP) zugeführt wird, mittels dem von derselben die zumindest eine Speichervorrichtung (CP) adressiert wird, woraufhin von dieser das mit den dort gespeicherten Informationen abgespeicherte Schlüsselwort (Kᵥ) über die Steuervorrichtung (SP) der betreffenden peripheren Steuervorrichtung (STB) zugeführt wird, wobei das Schlüsselwort (Kᵥ) während des Übertragungsvorgangs mit dem weiteren Zahlenwert (K_{c}) verschlüsselt ist.

8. Verfahren nach einem der vorstehenden Ansprüche,
**dadurch gekennzeichnet,**
daß nach Erhalt des Schlüsselwortes (Kᵥ) von der betreffenden peripheren Steuervorrichtung (STB) ein Quittungssignal der Steuervorrichtung (SP) zugeführt wird, woraufhin zum einen die erste Verbindung ausgelöst und zum anderen die zweite Verbindung erstellt wird.

9. Verfahren nach einem der vorstehenden Ansprüche,
**dadurch gekennzeichnet**,
daß im Zuge des ersten bzw. zweiten Verbindungsaufbaus eine schmalbandige bzw.gegebenenfalls eine breitbandige Verbindung erstellt wird.

10. Verfahren nach einem der Ansprüche 1 bis 4
**dadurch gekennzeichnet**,
daß der Datenträger (UIM) mit der peripheren Steuervorrichtung (STB) lösbar verbunden ist.

11. Verfahren nach einem der vorstehenden Ansprüche,
**dadurch gekennzeichnet**,
daß als Datenträger eine Chipkarte (C) mit integriertem Prozessor und Speichermitteln verwendet wird, auf dem die erste Prozedur (P) zum Ablauf gelangt.

12. Verfahren nach einem der vorstehenden Ansprüche,
**dadurch gekennzeichnet**,
daß die Chipkarte (C) eine vorausbezahlte Chipkarte ist.

13. Verfahren nach einem der vorstehenden Ansprüche,
**dadurch gekennzeichnet**,
daß die Netzknoten (ATMN) Informationen nach dem asynchronen Transfermodus durchschalten.

## Claims

1. Method for controlling connections for interactive services having peripheral control devices (STB) and having at least one network node (ATMN) which forms a transmission network and to which at least one storage device (CP) and at least one control device (SP) are connected, in which a first connection set-up from one of the peripheral control devices (STB) to the at least one control device (SP) is controlled in accordance with a comparison of two numerical values only if a first numerical value (SRES) which has been determined in the respective peripheral control device (STB) corresponds to a second numerical value which has been determined in the at least one control device (SP), and in which, if appropriate, a second connection set-up between the at least one storage device (CP) and the respective peripheral control device (STB) is subsequently controlled in accordance with a selection signal which is emitted by the peripheral control device (STB), characterized in that information is transmitted, encrypted with a keyword (Kᵥ), to the respective peripheral control device (STB) on the connection which has been produced by the second connection set-up, which keyword (Kᵥ) can be set subscriber-specifically and/or service-specifically and is stored in the storage device with the information stored there.

2. Method according to Claim 1, characterized in that the first numerical value (SRES) is determined in that an identifier (Kᵢ) is obtained from a data carrier (UIM) of the peripheral control device (STB), which identifier (Kᵢ) is fed, as input variable, together with a random number (RAND) which is obtained from the control device (SP) to a first procedure (P) which generates the first numerical value as output variable, using a defined algorithm, and sends said output variable to the control device (SP).

3. Method according to Claim 1 or 2, characterized in that the second numerical value is determined in that this identifier (Kᵢ) is stored in the control device (SP) and is fed, as input variable, together with the generated random number (RAND) to a second procedure which determines the second numerical value as output value.

4. Method according to one of Claims 1 to 3, characterized in that the first and second procedures are identical and the comparison is carried out in the control device (SP) .

5. Method according to Claims 1 to 3, characterized in that the first procedure generates, in addition to the first numerical value, a further numerical value (K_{c}) with which the information which is transmitted on the first connection is encrypted.

6. Method according to Claims 1 to 4, characterized in that the data carrier (UIM) has a further identifier (Kₐ, Kₜ) which, if appropriate, is of a temporary nature.

7. Method according to Claims 1 to 4, characterized in that a selection signal which is emitted by the peripheral control device (STB) is fed to the control device (SP) on the first connection, by means of which signal said control device (SP) addresses the at least one storage device (CP), in response to which the keyword (Kᵥ) which is stored with the information stored there is fed from said storage device (CP) to the respective peripheral control device (STB) via the control device (SP), the keyword (Kᵥ) being encrypted with the further numerical value (K_{c}) during the transmission process.

8. Method according to one of the preceding claims, characterized in that, after reception of the keyword (Kᵥ) from the respective peripheral control device (STB), an acknowledgement signal is fed to the control device (SP), in response to which, in the first instance, the first connection is released and, in the second instance, the second connection is set up.

9. Method according to one of the preceding claims, characterized in that, in the course of the first or second connection set-up, a narrowband or, if appropriate, broadband connection is set up.

10. Method according to one of Claims 1 to 4, characterized in that the data carrier (UIM) is releasably connected to the peripheral control device (STB).

11. Method according to one of the preceding claims, characterized in that a chip card (C) with integrated processor and storage means is used as data carrier, the first procedure (P) taking place on said carrier.

12. Method according to one of the preceding claims, characterized in that the chip card (C) is a prepaid chip card.

13. Method according to one of the preceding claims, characterized in that the network nodes (ATMN) switch through information according to the asynchronous transfer mode.

## Revendications

1. Procédé de commande de liaison pour des services interactifs avec des dispositifs de commande périphériques (STB) et avec au moins un noeud de réseau (ATMN) qui forme un réseau de transmission et auquel au moins un dispositif de mémorisation (CP) et au moins un dispositif de commande (SP) sont raccordés, dans lequel on commande un premier établissement de liaison de l'un des dispositifs de commande périphériques (STB) au au moins un dispositif de commande (SP) en fonction d'une comparaison de deux valeurs numériques seulement lorsqu'une première valeur numérique (SRES) déterminée dans le dispositif de commande périphérique (STB) considéré coïncide avec une deuxième valeur numérique déterminée dans le au moins un dispositif de commande (SP) et dans lequel, ensuite, en fonction d'un signal de sélection délivré par le dispositif de commande périphérique (STB), on commande éventuellement un deuxième établissement de liaison entre le au moins un dispositif de mémorisation (CP) et le dispositif de commande périphérique (STB) considéré,
caractérisé par le fait que, par l'intermédiaire de la liaison établie par le deuxième établissement de liaison vers le dispositif de commande périphérique (STB) considéré, on transmet des informations chiffrées avec un mot-clé (Kᵥ) qui peut être réglé de façon à être propre à l'abonné et/ou de façon à être propre au service et qui est mémorisé dans le dispositif de mémorisation avec les informations qui y sont mémorisées.

2. Procédé selon la revendication 1,
caractérisé par le fait qu'on détermine la première valeur numérique (SRES) en extrayant d'un support de données (UIM) du dispositif de commande périphérique (STB) un identificateur (Kᵢ) qui est envoyé comme grandeur d'entrée, conjointement à un nombre aléatoire (RAND) obtenu par le dispositif de commande (SP), à une première procédure (P) qui produit comme grandeur de sortie la première valeur numérique en utilisant un algorithme défini et qui l'envoie au dispositif de commande (SP).

3. Procédé selon la revendication 1 ou 2,
caractérisé par le fait qu'on détermine la deuxième valeur numérique en mémorisant cet identificateur (Kᵢ) dans le dispositif de commande (SP) et en l'envoyant comme grandeur d'entrée, conjointement au nombre aléatoire produit (RAND), à une deuxième procédure qui détermine comme grandeur de sortie la deuxième valeur numérique.

4. Procédé selon l'une des revendications 1 à 3,
caractérisé par le fait que la première et la deuxième procédure sont identiques et que la comparaison est effectuée dans le dispositif de commande (SP).

5. Procédé selon les revendications 1 à 3,
caractérisé par le fait que la première procédure produit outre la première valeur numérique une autre valeur numérique (K_{c}) par laquelle les informations transmises par l'intermédiaire de la première liaison sont chiffrées.

6. Procédé selon les revendications 1 à 4,
caractérisé par le fait que le support de données (UIM) comporte un autre identificateur (Kₐ, Kₜ) qui a éventuellement un caractère temporaire.

7. Procédé selon les revendications 1 à 4,
caractérisé par le fait qu'on envoie au dispositif de commande (SP) par l'intermédiaire de la première liaison un signal de sélection qui est délivré par le dispositif de commande périphérique (STB) et au moyen duquel le au moins un dispositif de mémorisation (CP) est adressé par le dispositif de commande, à la suite de quoi ce dispositif de mémorisation (CP) envoie le mot-clé (Kᵥ), mémorisé avec les informations qui y sont mémorisées par l'intermédiaire du dispositif de commande (SP) au dispositif de commande périphérique (STB) considéré, le mot-clé (Kᵥ) étant chiffré avec l'autre valeur numérique (K_{c}) pendant l'opération de transmission.

8. Procédé selon l'une des revendications précédentes,
caractérisé par le fait que, après réception du mot-clé (Kᵥ), le dispositif de commande périphérique (STB) considéré envoie un signal d'accusé de réception au dispositif de commande (SP), à la suite de quoi d'une part la première liaison est libérée et d'autre part la deuxième liaison est établie.

9. Procédé selon l'une des revendications précédentes,
caractérisé par le fait que, au cours du premier établissement de liaison, on établit une liaison à bande étroite et, au cours du deuxième établissement de liaison, on établit éventuellement une liaison à large bande.

10. Procédé selon l'une des revendications 1 à 4,
caractérisé par le fait que le support de données (UIM) est relié au dispositif de commande périphérique (STB) de manière à pouvoir en être séparé.

11. Procédé selon l'une des revendications précédentes,
caractérisé par le fait qu'on utilise comme support de données une carte à puce (C), avec processeur intégré et avec moyens de mémorisation, sur laquelle la première procédure (P) est exécutée.

12. Procédé selon l'une des revendications précédentes,
caractérisé par le fait que la carte à puce (C) est une carte à puce à paiement préalable.

13. Procédé selon l'une des revendications précédentes,
caractérisé par le fait que les noeuds de réseau (ATMN) commutent des informations selon le mode de transfert asynchrone.
